# EUROPÄISCHE PATENTSCHRIFT

(11) **EP 2 709 810 B1**
(45) Veröffentlichungstag und Bekanntmachung des Hinweises auf die Patenterteilung: **15.03.2017**
(21) Anmeldenummer: 12722727.0
(22) Anmeldetag: 19.05.2012
(51) Int. Cl.: B29B 11/16, B29C 70/38, B65G 47/91, B29C 70/54

(54) **VERFAHREN UND VORRICHTUNG ZUM TRANSPORTIEREN EINER AUS EINEM FLÄCHIGEN FASERGEWEBE AUSGESCHNITTENEN FASERKONTUR IM ZUGE DER HERSTELLUNG VON FASERVERSTÄRKTEN KUNSTSTOFF-FORMTEILEN**
METHOD AND DEVICE FOR TRANSPORTING A FIBER CONTOUR CUT OUT FROM A PLANAR WOVEN FABRIC IN THE COURSE OF PRODUCING FIBER-REINFORCED PLASTIC MOLDED PARTS
PROCÉDÉ ET DISPOSITIF POUR LE TRANSPORT D'UN CONTOUR DE FIBRES, DÉCOUPÉ D'UN TISSU FIBREUX PLAT, AU COURS DE LA PRODUCTION DE PIÈCES MOULÉES EN MATIÈRE PLASTIQUE RENFORCÉE PAR DES FIBRES

(30) Priorität: 19.05.2011 DE 102011076152
(43) Veröffentlichungstag der Anmeldung: 26.03.2014
(73) Patentinhaber: Dieffenbacher GmbH Maschinen- und Anlagenbau, 75031 Eppingen (DE)
(72) Erfinder: GRAF, Matthias, 75015 Bretten (DE)
(86) Internationale Anmeldenummer: PCT/EP2012/059315
(87) Internationale Veröffentlichungsnummer: WO 2012/156524

(56) Entgegenhaltungen:
- EP-A2- 1 905 709
- DE-U1-202006 016 833
- DE-U1-202007 015 153
- US-A- 5 427 518
- US-A1- 2004 050 225
- Ciu: "Maschinen haben schlaffe Karbonfasern prozesssicher im Griff", VDI nachrichten, Düsseldorf, 17. Dezember 2010 (2010-12-17), XP55035711, Gefunden im Internet: URL:http://www.vdi-nachrichten.com/artikel /Maschinen_haben_schlaffe_Karbonfasern_pro zesssicher_im_Griff/51084/2/GoogleNews [gefunden am 2012-08-17]

## Beschreibung

Die Erfindung betrifft ein Verfahren zum Transportieren einer aus einem flächigen Fasergewebe ausgeschnittenen Faserkontur im Zuge der Herstellung von faserverstärkten Kunststoff-Formteilen nach dem Oberbegriff des Anspruches 1 und eine Vorrichtung nach dem Oberbegriff des Anspruches 4.

Im Zuge der Herstellung von faserverstärkten Kunststoffbauteilen, auch Faserverbundbauteile genannt, ist insbesondere in der industriellen Anwendung das RTM-Verfahren (Resin-Transfer-Moulding-Verfahren) gängige Praxis. Der gesamte Herstellungsprozess bis zu einem verwendungsfähigen Kunststoffbauteile besteht aus mehreren nachfolgend ablaufenden Einzelprozessen. In einem ersten Verfahrensschritt werden Faserhalbzeuge (Preforms/Prepregs) hergestellt. In diesem Preform-Prozess werden in der Regel mehrschichtige Gewebe oder Fasergelege üblicherweise in 2D (zweidimensional), also im Wesentlichen in einer Ebene, zusammengefügt, so dass das Faserhalbzeug im Wesentlichen bereits die notwendigen äußeren Konturen und teilweise auch bereits besondere und/oder mehrfache Schichten oder Schichtdicken aufweist. Vorzugsweise wird ein Bindemittel in die Trennebenen oder in das Gelege selbst eingebracht, das nach seiner Aktivierung und/oder Aushärtung zu einer Fixierung der Schichten zueinander und somit zur Festlegung einer festgelegten 3D-Form führt, welche in einem Umformwerkzeug (Umformwerkzeug, Drapierwerkzeug oder ähnliches) im weiteren Verlauf des Preform-Prozess geformt wird. Je nach Bedarf wird das Faserhalbzeug noch nachgeschnitten oder an vorgegebenen Stellen ausgestanzt um eine noch präzisere Kontur zu erhalten. Nach dem Einlegen des Faserhalbzeugs in das Werkzeug der Presse werden die Werkzeughälften geschlossen und das notwendige Harz in die Kavität des Werkzeuges injiziert, wobei das Harz die Faserstruktur des Faserhalbzeuges imprägniert, die Fasern einschließt und fest in die Matrix einbindet. Nach dem Aushärten des Harzes kann das faserverstärkte Kunststoffbauteil entformt werden.

Neben dem RTM-Verfahren selbst, legt bereits die Herstellung eines Faserhalbzeuges den Grundstein für den Erfolg der Herstellung eines Kunststoffbauteiles. Das Ziel ist es nach der Formgebung des Vorformlings aus einem biegeschlaffen Material einen Vorformling zu erhalten, der biegesteif genug ist um vollständig automatisiert und prozeßsicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik.

Für die 3D-Umformung von mehrlagigen zweidimensionalen Zuschnitten aus Fasergeweben sind die folgenden Verfahrensschritte bekannt: Es werden Fasergewebe oder -gelege von einer Rolle abgewickelt und je nach Bedarf aus mehreren verschiedenen Geweben oder Gelegen, Formen und Größen zu einem Fasergewebestapel zusammengelegt. Dabei kann es notwendig sein, die Außen- und ggf. Innenkontur entsprechend einem Schnittmuster des Vorformlings respektive des Kunststoffformteils zu bearbeiten oder zuzuschneiden. Das Schnittmuster wird dabei aus einer Abwicklung des Vorformlings, oder des Endbauteils erzeugt. Vorzugsweise wird dann der erstellte, im Wesentlichen ebene Fasergewebestapel mittels einer Drapiervorrichtung drapiert, respektive in eine dreidimensionale Vorform umgeformt. Um eben aus einem biegeschlaffen Fasergewebe einen, im Wesentlichen biegesteifen Vorformling zu erhalten, ist es meist notwendig, dass zwischen die einzelnen Lagen ein Bindemittel eingebracht und anschließend ausgehärtet wird.

Es hat sich herausgestellt, dass bereits kleinste Fehler oder Beschädigungen oder Abdrücke an oder in den Fasergeweben zu sichtbaren Mängeln an den späteren Kunststoffformteilen führen kann. Aus diese Grund ist es essentiell, dass während der Herstellung eines Vorformlings aus mehreren Schichten, wobei zumindest eine Schicht ein Fasergelege ist, dass dieses Fasergelege schonend behandelt wird. Normalerweise ist das Ausschneiden oder Ausstanzen einer Kontur unschädlich und wird auf verschiedenste Weisen durchgeführt. Beispielsweise kann mittels eines Rollmessers aus einer Rolle Fasergewebe auf einem Schneidtisch eine Kontur ausgeschnitten.

Anschließend fährt eine Hebevorrichtung über die ausgeschnittene Kontur, hebt die Kontur (das ausgeschnittene Fasergewebe oder-gelege) an und verfährt diese in eine Drapierform. Dieser Schritt kann auch mehrmals ausgeführt werden, um einen mehrschichtigen Vorformling herzustellen. Je nach Ausführungsform kann während oder im Zuge des Verfahrens eine Beleimstation durchfahren werden, die die Kontur entsprechend mit Bindemittel versieht.

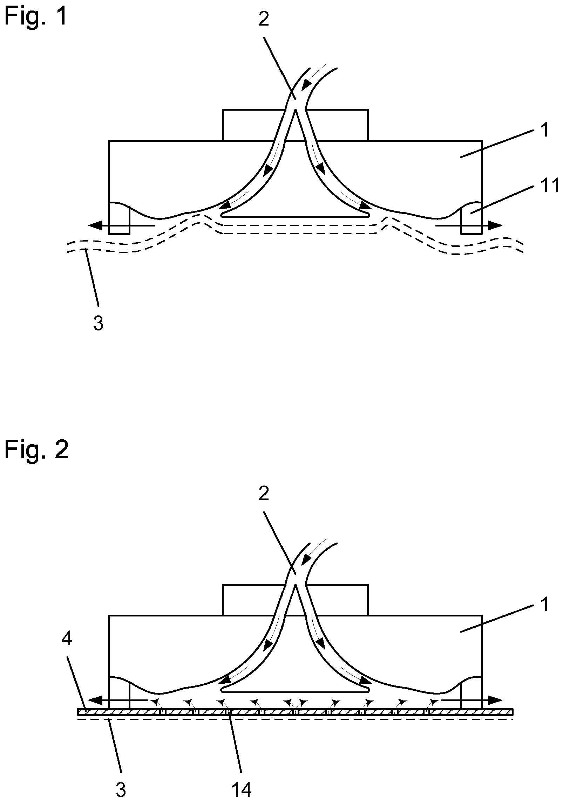

Ein mittlerweile bewährter Sauggreifer, insbesondere nach dem Bernoulli-Prinzip ist aus einer Vielzahl von Veröffentlichungen bekannt geworden, beispielsweise aus DE 10 2008 023 907 A1, DE 10 2008 062 343 A1 oder DE 103 47 545 A1. Alle diese Sauggreifer haben gemeinsam, dass nicht mit Unterdruck, sondern mit Druckluft gearbeitet werden kann und trotzdem ein Werkstück, oder im vorliegenden Falle ein biegeschlaffes Fasergewebe, respektive Kontur, angehoben werden kann. Es versteht sich von selbst, dass diese Sauggreifer an entsprechenden Manipulatoren (3-Achsen-Verfahrvorrichtung, Industrieroboter oder dgl.) mit einer Schnittstelle angebunden sind.
Nachteilig bei dieser Art von Sauggreifern ist, dass sie an den anzuhebenden Fasergeweben immer noch Abdrücke hinterlassen, wie in Figur 1 zum Stand der Technik etwas übertrieben dargestellt ist. Durch die einströmende Druckluft und den entstehenden Bernoulli-Effekt wird die Kontur in den für den Bernoulli-Effekt notwendigen Strömungsraum gezogen. Dies führt zu Verschiebungen der Faserstruktur oder der Fäden innerhalb des Fasergeleges, was später im Kunststoffformteil durchaus erkennbar sein kann. Auch hat sich herausgestellt, dass insbesondere die kreisförmige Außenform des Sauggreifers ebenfalls einen meist kreisförmigen Abdruck auf dem Fasergewebe hinterläßt.

Gleichzeitig hat sich herausgestellt, dass die meisten Schneidvorrichtungen nicht immer 100%ig erfolgreich sind das Fasergewebe auf dem Schneidtisch zu durchtrennen. Es kann also dazu kommen, dass nicht nur während des Fixierens und Anhebens des Fasergeleges durch die Sauggreifer das Fasergewebe Schaden nimmt, sondern auch durch Restverbindungen, die während des Anhebens an der geschnittenen Kontur ziehen und das Fasergewebe der Kontur verziehen, sondern das darüber hinaus durch das Fasergewebe auf dem Schneidetisch Schaden nimmt oder sogar verschoben wird, was wieder Probleme bei dem nächst folgenden Schneidvorgang für die nächste Kontur ergibt. Neben Fehlschnitten kann es bei Faltenbildung auch zu fehlerhaften Konturformen kommen, die einen schadhaften Vorformling produzieren.

Die Aufgabe der Erfindung besteht darin, ein Verfahren und eine Vorrichtung Zu schaffen, mit denen, gegenüber dem Stand der Technik in einer einfachen und sicheren Weise eine ausgeschnittene Kontur sicher angehoben und verfahren werden kann, wobei Schnittfehler an der Kontur des Fasergewebes keine Auswirkungen auf den weiteren Herstellungsprozess aufweisen und das Fasergewebe während des Aufnehmens und Transportierens keinen Schaden nimmt. Im Weiteren soll in vorteilhafter Weise verhindert werden, dass das auf dem Schneidtisch verbleibende Fasergelege durch den Abtransport der Kontur Schaden nimmt und/oder Lageänderungen erfährt und so Fehler bei nachfolgenden zu schneidenden Konturen ausreichend sicher vermieden werden.

Im Folgenden werden die Begriffe Faserkontur für ein ausgeschnittenes und zu manipulierendes Fasergelege verwendet, der Begriff Kontur bezieht sich im Folgenden auf die äußere Form des ausgeschnittenen Fasergewebes und entsprechend auch auf die äußere Form der Stütz- und/oder der Niederhalteplatte. Als Sauggreifer ist die gesamte Konstruktion zum Fixieren und Anheben zu verstehen, wobei die Saugvorrichtung auch in größerer Stückzahl in dem Sauggreifer vorhanden sein können, entsprechend der vorgegebenen Faserkontur.

Die Lösung der Aufgabe für das Verfahren besteht dabei darin, dass eine Faserkontur auf einem Schneidtisch aus einem flächigen Fasergewebe mittels einer Schneidvorrichtung unter Ausbildung eines Trennschnittes ausgeschnitten wird, und anschließend ein Sauggreifer über die Faserkontur verfährt und eine Flächenseite der Transportplatte in Kontakt mit der ausgeschnittenen Faserkontur und eine Niederhalteplatte in Kontakt mit dem flächigen Fasergewebe bringt, und wobei mittels an der zweite Flächenseite der Transportplatte angeordneten Saugvorrichtungen und zu den Saugvorrichtungen korrespondierenden Durchbrechungen in der Transportplatte die Faserkontur an der Transportplatte fixiert und von dem Schneidtisch abgehoben wird, während die Niederhalteplatte das Fasergewebe auf dem Schneidtisch fixiert, und wobei nach dem Anheben der Transportplatte der Sauggreifer und/oder die Niederhalteplatte vom Schneidtisch abhebt und die Faserkontur vom Sauggreifer transportiert wird

Die Lösung der Aufgabe für eine Vorrichtung besteht darin, dass an einem Sauggreifer zumindest eine Saugvorrichtung an einer ersten Flächenseite einer Transportplatte angeordnet ist, wobei die zweite Flächenseite zur Ansaugung einer Faserkontur durch zu der Saugvorrichtung korrespondierenden Durchbrechungen in der Transportplatte geeignet ist und die Transportplatte im Wesentlichen in Ihrer äußeren Kontur wie die geschnittene Faserkontur ausgebildet ist, wobei die Niederhalteplatte bei der Anordnung in einer Ebene mit der Transportplatte diese im Wesentlichen unter Ausbildung eines Spaltes umschließt und wobei die Niederhalteplatte und/oder die Transportplatte mit zumindest einer geeigneten Stellvorrichtung in zumindest zwei voneinander unterschiedlichen Ebenen verfahrbar ist.

Im weiteren ergeben sich die Vorteile, dass die Faserkontur schonend transportiert werden kann und durch die Niederhaltung etwaige Restverbindungen im Trennschnitt abgetrennt werden können, ohne dass sich das Fasergewebe oder die Faserkontur signifikant verziehen.

Im weiteren ist es von Vorteil, wenn die Saugvorrichtungen nach dem Bernoulli-Prinzip arbeiten und die durch die Druckluftzufuhr entstehenden Luftströmungen der Saugvorrichtungen durch die Transportplatte und die Niederhalteplatte im Wesentlichen von dem Trennschnitt der Faserkontur respektive des Fasergewebes weggeführt werden ohne dass es zu Verwirbelungen an den Trennschnitten kommt. Weiter ist es von Vorteil, dass die Faserkontur im Zuge der Kontaktnahme mit der Transportplatte flach ausgebreitet wird und unter Umständen dadurch besser auf ein Vorgelege für einen Vorformling abgelegt werden kann oder besser für eine Beleimung geeignet ist. Im Übrigen kann es vorgesehen sein, die flach an der Transportplatte anliegende Faserkontur mit automatischen Bildgebenden oder anderen geeigneten Überwachungsvorrichtungen während des Transportes prüfen zu lassen, ob die Qualität ausreichend ist für die Weiterverarbeitung. Natürlich kann die Saugvorrichtung auch mit Unterdruck aber vorzugsweise mit Druckluft betreibar sein.

Die Vorrichtung ist insbesondere zur Durchführung des Verfahrens geeignet, kann aber auch eigenständig betrieben werden.

In vorteilhafter Weise wird nun vermieden, dass Schäden an dem auf dem Schneidtisch verbleibenden Fasergelege und an der anzuhebenden Faserkontur entstehen, weil während des Anhebens eine konturnahe oder konturentsprechende Niederhalteplatte das restliche Fasergewebe auf den Untergrund, respektive den Schneidtisch drückt. Dazu werden Schäden an der anzuhebenden Faserkontur ebenfalls vermieden und die Faserkontur wird im Wesentlichen in einer Ebene an der Transportplatte gehalten) im Sauggreifer durch die Saugvorrichtungen gehalten. Weiter ist von Vorteil, dass durch den Niederhalter vermieden werden kann, dass durch die Saugvorrichtungen, respektive deren Luftströmungen über die Transportplatte hinweg das verbleibende Fasergewebe auf dem Schneidtisch angehoben oder verwirbelt wird. In ebenso vorteilhafter Weise wird durch die bevorzugt konturnahe Ausgestaltung der Transportplatte entsprechend der ausgeschnittenen Faserkontur vermieden, dass die Luftströmungen der Saugvorrichtungen die angehobene Faserkontur an ihren Rändern am Trennschnitt) ausfransen. Das gleiche gilt wiederum auf für das verbleibende Fasergewebe auf dem Schneidtisch, was inbesondere bei einer optimierten Schnittanordnung der Konturen von Vorteil ist, wenn beispielsweise ein Trennschnitt die Kante von zwei verschiedenen Faserkonturen bildet. Und diese nacheinander abgehoben werden sollen.

Bei Verwendung einer Druckluftbetriebenen Saugvorrichtung wird durch die Durchbrechungen in der Transportplatte Luft auf die Oberflächenseite der Saugvorrichtungen gezogen, im Wesentlichen nach dem Bernoulli-Venturi-Prinzip. Die Durchbrechungen können hierzu geeignete Löcher oder Langlöcher sein, deren Anordnung oder Größe durch Versuche ermittelt werden kann und unter anderem abhängig sind von der Art des Fasergewebes, der Stärke der Luftströmungen und anderen Faktoren.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: in einer Schnittansicht eine herkömmliche Saugvorrichtung nach dem Stand der Technik bei der Aufnahme eines biegeschlaffen Gewebes,
- Figur 2: in einer weiteren Schnittansicht eine Saugvorrichtung mit einer Transportplatte bei der Aufnahme eines biegeschlaffen Gewebes,
- Figur 3: eine geschnittene Draufsicht auf eine Kontur einer Transportplatte mit darauf angeordneten Saugvorrichtungen,
- Figur 4: eine weitere geschnittene Draufsicht auf eine Kontur einer Transportplatte mit darauf angeordneten Saugvorrichtungen nach Figur 3 mit zusätzlicher Darstellung einer korrespondierenden Niederhalteplatte und dazwischen angeordnetem Spalt,
- Figur 5: in einer vergrößerten Ansicht eine Hebevorrichtung nach Figur 3 in einem seitlichen Schnitt mit zusätzlicher Darstellung der Stellvorrichtungen für die Niederhalteplatte.

Figur 1 zeigt in einer Schnittansicht eine herkömmlichen Saugvorrichtung nach dem Stand der Technik bei der Aufnahme eines biegeschlaffen Gewebes, das während des Bernoulli-Effektes verformt und die notwendigen Hohlräume für der Saugvorrichtung 1 gezogen wird. Es ist auch klar erkenntlich, dass die Stützkörper 11 am äußeren Umfang der Saugvorrichtung 1 angeordnet, dazu geeignet sind, Abdrücke auf der Faserkontur 3 zu hinterlassen. Mit den Pfeilen sind die Luftströmungen der Druckluftzufuhr 2 symbolisiert.

Figur 2 zeigt, wie nun mit einer flächigen Transportplatte 4, die deutlich über die äußere Kontur der Saugvorrichtung 1 hinausgeht, verhindert wird, dass sich die empfindliche Faserkontur 3 verformt. Um dennoch den Effekt der Saugvorrichtung 1 an der Faserkontur 3 wirken zu lassen, sind Bohrungen, Langlöcher oder andere geeignete Durchbrechungen 14 in der Transportplatte 4 vorgesehen, die korrespondierend zu der Saugvorrichtung 1 angeordnet sind, so dass die vorbeistreichende Luftströmung eine Art Venturi-Effekt in den Durchbrechungen 14 bewirkt, was die Anheftung der Faserkontur an der Transportplatte 4 bewirkt.

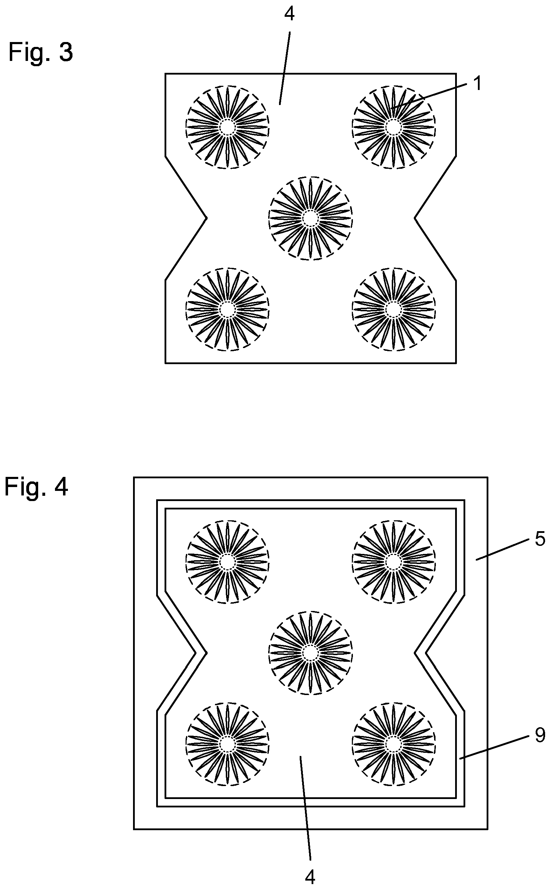

In Figur 3 ist eine geschnittene Draufsicht auf eine Kontur einer Transportplatte 4 mit darauf angeordneten Saugvorrichtungen 1 zu erkennen. Durch die Transportplatte 4 wird die dahinterliegende Faserkontur 3 im Wesentlichen verdeckt, auch sind keine Durchbrechungen 14 zu erkennen, was aber die mögliche Anordnung derselben außerhalb der Kontaktstellen der Saugvorrichtungen 1 mit der Transportplatte 4 nicht ausschließen soll.

Figur 4 zeigt eine weitere geschnittene Draufsicht auf eine Kontur einer Transportplatte 4 mit darauf angeordneten Saugvorrichtungen 1 nach Figur 3 mit zusätzlicher Darstellung einer korrespondierenden Niederhalteplatte 5 und einem sich dazwischen ausbildendem Spalt 9. Vorzugsweise bildet der Spalt 9 die Kontur der Faserkontur 3 im Wesentlichen nach, so dass bei austretender Druckluft aus den Saugvorrichtungen die Trennschnitte 12 zwischen der Faserkontur 3 und dem Fasergewebe 6 nicht durch die Luftströmungen angegriffen werden können.

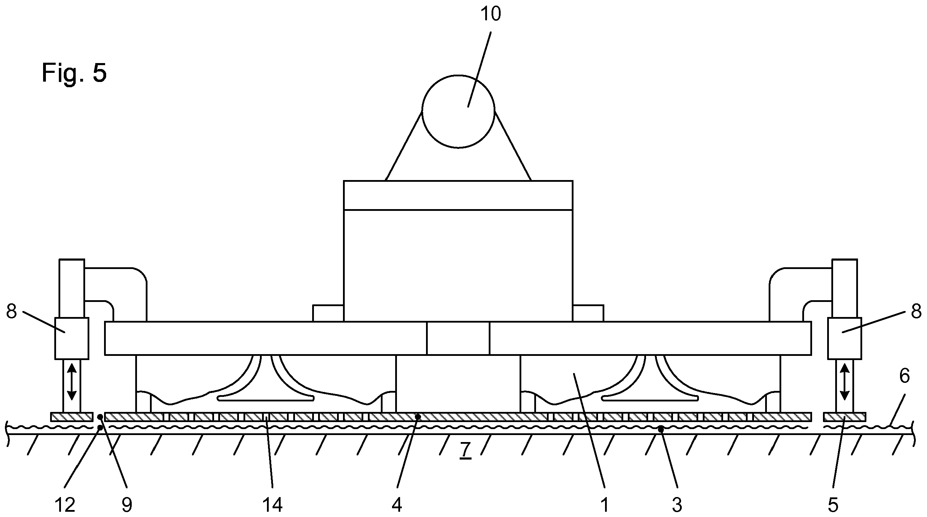

In Figur 5 findet sich in einer vergrößerten Ansicht eine Hebevorrichtung respektive ein Sauggreifer nach Figur 3 in einem seitlichen Schnitt mit zusätzlicher Darstellung der beispielhaften Stellvorrichtungen 8 für die Niederhalteplatte 5. In der vorliegenden Ansicht wird gerade die Faserkontur 3 durch die Transportplatte 4 und der zum Trennschnitt 12 benachbarte Bereich des Fasergewebes 6 mit der Niederhalteplatte 5 auf dem Schneidtisch 7 fixiert. (1422)

### Bezugszeichenliste: P1422

- 1.: Saugvorrichtung
- 2.: Druckluftzufuhr
- 3.: Faserkontur
- 4.: Transportplatte
- 5.: Niederhalteplatte
- 6.: Fasergewebe
- 7.: Schneidtisch
- 8.: Stellvorrichtung
- 9.: Spalt
- 10.: Schnittstelle
- 11.: Stützkörper
- 12.: Trennschnitt
- 13.:
- 14.: Durchbrechungen

## Patentansprüche

1. Verfahren zum Transportieren einer aus einem flächigen Fasergewebe ausgeschnittenen Faserkontur im Zuge der Herstellung eines ein- oder mehrschichtigen Vorformlings als Vorstufe zur Herstellung von faserverstärkten Kunststoff-Formteilen mit einem Sauggreifer **gekennzeichnet durch** folgende Verfahrensschritte:
**1.1** eine Faserkontur (3) wird auf einem Schneidtisch (7) aus einem flächigen Fasergewebe (6) mittels einer Schneidvorrichtung unter Ausbildung eines Trennschnittes (12) ausgeschnitten,
**1.2** ein Sauggreifer verfährt über die Faserkontur (3) und bringt eine Flächenseite einer Transportplatte (4) in Kontakt mit der ausgeschnittenen Faserkontur (3) und eine Niederhalteplatte (5) in Kontakt mit dem flächigen Fasergewebe (6),
**1.3** mittels an der zweite Flächenseite der Transportplatte (4) angeordneten Saugvorrichtungen (1) und zu den Saugvorrichtungen korrespondierenden Durchbrechungen (14) in der Transportplatte (4) wird die Faserkontur (3) an der Transportplatte (4) fixiert und von dem Schneidtisch abgehoben, während die Niederhalteplatte (5) das Fasergewebe (6) auf dem Schneidtisch (7) fixiert,
**1.4** nach dem Anheben der Transportplatte (4) hebt der Sauggreifer und/oder die Niederhalteplatte (5) vom Schneidtisch (7) ab und die Faserkontur (3) wird vom den Sauggreifer transportiert.

2. Verfahren nach Anspruch 1,**dadurch gekennzeichnet, dass** die Saugvorrichtungen (1) nach dem Bernoulli-Prinzip arbeiten und die durch die Druckluftzufuhr (2) entstehenden Luftströmungen der Saugvorrichtungen (1) durch die Transportplatte (4) und die Niederhalteplatte (5) im Wesentlichen von dem Trennschnitt (12) der Faserkontur (3) weggeführt werden.

3. Verfahren nach Anspruch 1 oder 2, **dadurch gekennzeichnet, dass** die Faserkontur (3) im Zuge der Kontaktnahme mit der Transportplatte (4) flach ausgebreitet wird.

4. Vorrichtung zum Transportieren einer aus einem flächigen Fasergewebe ausgeschnittenen Faserkontur im Zuge der Herstellung eines ein- oder mehrschichtigen Vorformlings als Vorstufe zur Herstellung von faserverstärkten Kunststoff-Formteilen mit einem durch eine geeignete Vorrichtung multiaxial bewegbaren Sauggreifer, **dadurch gekennzeichnet, dass** an dem Sauggreifer zumindest eine Saugvorrichtung (1) an einer ersten Flächenseite einer Transportplatte (4) angeordnet ist, wobei die zweite Flächenseite zur Ansaugung einer Faserkontur (3) durch zu der Saugvorrichtung (1) korrespondierenden Durchbrechungen (14) in der Transportplatte geeignet ist und die Transportplatte (4) im Wesentlichen in Ihrer äußeren Kontur wie die geschnittene Faserkontur (3) ausgebildet ist,
wobei eine Niederhalteplatte (5) bei der Anordnung in einer Ebene mit der Transportplatte (4) diese im Wesentlichen unter Ausbildung eines Spaltes (9) umschließt
und wobei die Niederhalteplatte (5) und/oder die Transportplatte (4) mit zumindest einer geeigneten Stellvorrichtung (8) in zumindest zwei voneinander unterschiedlichen Ebenen verfahrbar ist.

5. Vorrichtung nach dem vorhergehenden Anspruch, **dadurch gekennzeichnet, dass** die Saugvorrichtung (1) mit Unterdruck oder Druckluft betreibar ist.

6. Vorrichtung nach Anspruch 4 oder 5, geeignet zur Durchführung des Verfahrens nach den Ansprüchen 1 bis 3.

## Claims

1. A method for transporting a fiber contour cut out from a planar fiber fabric for producing a single-layer or multi-layer preform as a preliminary step for producing fiber-reinforced plastic molded parts with a suction gripper, **characterized by** the following method steps:
1.1. a fiber contour (3) is cut out from the planar fiber fabric (6) on a cutting table (7) by means of a cutting apparatus by forming a severing cut (12);
1.2. a suction gripper travels over the fiber contour (3) and brings a flat side of a transport plate (4) into contact with the cut-out fiber contour (3) and a holding-down plate (5) into contact with the planar fiber fabric (6),
1.3. the fiber contour (3) is fixed to the transport plate (4) and lifted from the cutting table by means of suction apparatuses (1) arranged on the second flat side of the transport plate (4) and through-holes (14) in the transport plate (4) which correspond to the suction apparatuses, while the holding-down plate (5) fixes the fiber fabric (6) on the cutting table (7),
1.4. after the lifting of the transport plate (4) the suction gripper and/or the holding-down plate (5) is lifted from the cutting table (7) and the fiber contour (3) is conveyed by the suction gripper.

2. A method according to claim 1, **characterized in that** the suction apparatuses (1) operate according to the Bernoulli principle and the air flows of the suction apparatuses (1) which are produced by the compressed air supply (2) through the transport plate (4) and the holding-down plate (5) are substantially guided away from the severing cut (12) of the fiber contour (3).

3. A method according to claim 1 or 2, **characterized in that** the fiber contour (3) is spread out in a flat manner in the process of making contact with the transport plate (4).

4. An apparatus for transporting a fiber contour cut out from a planar fiber fabric for producing a single-layer or multi-layer preform as a preliminary step for producing fiber-reinforced plastic molded parts with a suction gripper which can be moved in a multi-axial manner by means of a suitable apparatus, **characterized in that** on the suction gripper at least one suction apparatus (1) is arranged on a first surface side of a transport plate (4), wherein the second surface side is capable of sucking up a fiber contour (3) via through-holes (14) in the transport plate which correspond to the suction apparatus (1), and the transport plate (4) is formed substantially with respect to its outer contour like the cut fiber contour (3), wherein a holding-down plate (5), when arranged in one plane with the transport plate (4), substantially encloses said plate by forming a gap (9), and wherein the holding-down plate (5) and/or the transport plate (4) can be moved by means of at least one suitable actuating apparatus (8) in at least two mutually different planes.

5. An apparatus according to the preceding claim, **characterized in that** the suction apparatus (1) can be operated with vacuum or compressed air.

6. An apparatus according to claim 4 or 5, capable for carrying out the method according to the claims 1 to 3.

## Revendications

1. Procédé pour transporter avec un dispositif de préhension par aspiration une forme en fibres découpée dans un tissu de fibres plan au cours de la fabrication d'une ébauche en une ou plusieurs couches dans une étape préalable à la fabrication de pièces moulées en matière plastique armée de fibres, **caractérisé en ce qu'**il comprend les étapes suivantes :
1.1 découpe d'une forme en fibres (3) dans un tissu de fibres plat (6) sur une table de découpe (7) au moyen d'un dispositif de coupe en formant une découpe de séparation (12) ;
1.2 déplacement d'un dispositif de préhension par aspiration au-dessus de la forme en fibres (3) et mise en contact d'un côté plat d'une plaque de transport (4) avec la forme en fibres (3) découpée et d'une plaque de maintien (5) avec le tissu de fibres plat (6),
1.3 au moyen de dispositifs d'aspiration (1) disposés sur la deuxième face plate de la plaque de transport (4) et de perforations (14) correspondant aux dispositifs d'aspiration dans la plaque de transport (4), fixation de la forme en fibres (3) sur la plaque de transport (4) pour la soulever de la table de découpe tandis que la plaque de maintien (5) fixe le tissu de fibres (6) sur la table de découpe (7),
1.4 après le soulèvement de la plaque de transport (4), relèvement du dispositif de préhension par aspiration et/ou de la plaque de maintien (5) pour les éloigner de la table de découpe (7) et transport de la forme en fibres (3) par le dispositif de préhension par aspiration.

2. Procédé selon la revendication 1, **caractérisé en ce que** les dispositifs d'aspiration (1) fonctionnent selon le principe de Bernoulli et les flux d'air des dispositifs d'aspiration (1) produits par l'arrivée d'air comprimé (2) sont évacués pour l'essentiel de la découpe de séparation (12) de la forme en fibres (3) à travers la plaque de transport (4) et la plaque de maintien (5).

3. Procédé selon la revendication 1 ou 2, **caractérisé en ce que** la forme en fibres (3) est étalée à plat au cours de la mise en contact avec la plaque de transport (4).

4. Dispositif pour transporter une forme en fibres découpée dans un tissu de fibres plat au cours de la fabrication d'une ébauche en une ou plusieurs couches dans une étape préalable à la fabrication de pièces moulées en matière plastique armée de fibres, à l'aide d'un dispositif de préhension par aspiration pouvant être déplacé sur plusieurs axes par un dispositif adéquat, **caractérisé en ce qu'**au moins un dispositif d'aspiration (1) est prévu sur le dispositif de préhension par aspiration sur un premier côté plat d'une plaque de transport (4),
le deuxième côté plat qui convient pour l'aspiration d'une forme en fibres (3) à travers des perforations (14) dans la plaque de transport en correspondance avec le dispositif d'aspiration (1) et la plaque de transport (4) ayant une forme extérieure sensiblement semblable à la forme en fibres (3) découpée,
une plaque de maintien (5) entourant pour l'essentiel la plaque de transport (4) lorsqu'elle est placée dans le même plan que celle-ci, en formant un interstice (9) et la plaque de maintien (5) et/ou la plaque de transport (4) pouvant être déplacées avec au moins un dispositif de manoeuvre (8) adéquat dans au moins deux plans différents.

5. Dispositif selon la revendication précédente, **caractérisé en ce que** le dispositif d'aspiration (1) peut fonctionner avec une dépression ou avec de l'air comprimé.

6. Dispositif selon la revendication 4 ou 5, convenant pour la mise en oeuvre du dispositif selon les revendications 1 à 3.
